# EUROPEAN PATENT SPECIFICATION

(11) **EP 3 631 191 B1**
(45) Date of publication and mention of the grant of the patent: **05.08.2020**
(21) Application number: 18719106.9
(22) Date of filing: 17.04.2018
(51) Int. Cl.: F03B 3/12

(54) **RUNNER FOR A HYDROELECTRIC AXIAL TURBINE OR PUMP**
LÄUFER FÜR EINE HYDROELEKTRISCHE AXIALTURBINE ODER PUMPE
ROUE MOBILE POUR UNE TURBINE AXIALE OU POMPE HYDROÉLECTRIQUE

(30) Priority: 01.06.2017 US 201762513705 P
(43) Date of publication of application: 08.04.2020
(73) Proprietor: Voith Patent GmbH, 89522 Heidenheim (DE)
(72) Inventor: COULSON, Stuart, Seven Valleys PA 17360 (US); SMITH, Seth, York Springs 17372 (US); RIEGLER, Walter, York PA 17408 (US); ORT, Thomas, York PA 17404 (US)
(74) Representative: Voith Patent GmbH - Patentabteilung
(86) International application number: PCT/EP2018/059706
(87) International publication number: WO 2018/219546

(56) References cited:
- CA-A- 352 822
- US-A1- 2009 092 496
- US-A1- 2015 017 004

## Description

The present invention relates to hydroelectric axial turbine or pump installations having a revolving element or runner of the propeller type.

The runner of an axial water pump or turbine comprises a hub and a plurality of runner blades fixed to the hub. Within the state of the art there are known basically four different designs of such a runner. The runner can be made by integrally casting the hub with the runner blades, by welding separately casted runner blades to the hub, by bolting separately casted runner blades to the hub or by casting each runner blade integrally with a segment of the hub and arranging the segments in an annular array which are held together by shrink rings. Examples of the known runners are shown in U.S. Patent Application Publications 2009/0092496 and 2015/0017004.

The advantage offered by the designs, where separate blades are bolted or welded to the hub, is that one or more of the blades may be attached to the hub at the dam or other turbine installations location (at site). Shipping the hub by itself or with fewer than all of its runner blades attached to the hub reduces shipping cost and difficulties. The same applies for the design comprising blades integrally casted with a segment of the hub. However these designs are involved with other drawbacks. Welding a runner blade to the hub at site is a difficult task which is often beyond the skills of the site personnel. Runners with bolted blades are expensive since the set-up is complicated and requires additional milling. The same applies also for the design comprising blades integrally casted with a segment of the hub. Another draw-back for runners with bolted blades is that the design involves a bigger size hub, since the trunnions require a lot of space. However there are known designs of runners with bolted blades and small size hubs but these designs are even more expensive (e.g. US 2015/0017004).

The object of this invention is to provide a runner of an axial water pump or turbine of the propeller type, which can be shipped without difficulties and high costs, which can be assembled at site without affording exceptional skills of the site personnel and which costs less than the runners with bolted blades.

This object is achieved by a runner according to claim 1. Other favorable implementations of the invention are disclosed in the depended claims.

The inventors have recognized that it is sufficient for avoiding difficulties during shipping a propeller type runner that only one or two of the blades of the runner are dismounted from the hub. The other blades can stay fixed to the hub and therefore it is not necessary that these blades are of the bolted type. Concerning costs it is advantageous that the fixed blades are welded to the hub. The welding takes place in the factory and not at site.

The invention will hereinafter be described in conjunction with the appended drawing:

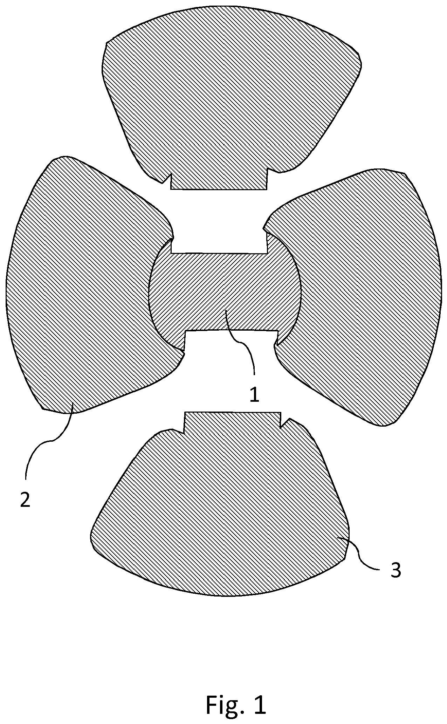

Fig. 1 is a cross-sectional axial view of a propeller type runner according to the present invention.
Figure 1 displays schematically a cross-sectional axial view of a propeller type runner. The hub of the runner is designated by 1. The runner comprises four blades whereas two of the blades are fixed to the hub by welding. One of the fixed blades is designated by 2. The other two blades are construed to be detachable meaning that these blades are of the bolted type. One of the bolted blades is designated by 3. In figure 1 the bolted blades are displayed in the detached position as would be the case for shipping the runner. It is clear that the size of the runner in the vertical direction of figure 1 is much reduced by dismounting the bolted blades. In many cases it would be even sufficient to construe only one of the blades to be detachable to avoid difficulties during shipment of the runner.

In figure 1 it can also be seen that the mounting flanges - the trunnions - of the bolted blades 3 are relatively large. The size of the hub 1 is not big enough that all of the blades could be made detachable which such large trunnions. Since only two blades 3 are construed to be detachable and the two blades 2 adjoining each bolted blade 3 are welded to the hub 1 there is space on the hub 1 spared and the large trunnions can be accommodated by a relatively small hub 1. Welded blades do not require trunnions. Large trunnions improve the structural stability of hubs with bolted blades. Furthermore large trunnions do not need a sophisticated design and can be produced at low costs.

Figure 1 is meant as an example of the invention. Of course the invention is also adoptable to runners having a different number of blades. In any case each of the up to and including two bolted blades 3 have to be adjoined by two blades 2, which are fixed to the hub 1 by welding. It is clear that one of the two adjoining welded blades 2 has to be located on one side of the bolted blade 3 and the other adjoining welded blade 2 has to be located on the other side of the bolted blade 3. This means that a bolted blade 3 does not adjoin another bolted blade 3.

If there are two bolted blades 3 incorporated in a runner according to the invention, is favorable that the two bolted blades 3 are located on opposite sides of the hub 1 to reduce the size of the runner as much as possible during the transport to the site and to facilitate the balancing of the runner.

## Claims

1. A propeller-type runner for a hydraulic turbine or pump, comprising a hub (1) and a plurality of blades (2, 3), **characterised in that** up to and including two blades (3) are fixed to the hub (1) using bolts and the remaining blades (2) are welded to the hub, and wherein each bolted blade (3) is adjoined by two welded blades (2).

2. The runner of claim 1, wherein the total number of blades (2, 3) is three, and exactly one blade (3) is fixed to the hub (1) using bolts.

3. The runner of claim 1, wherein the total number of blades (2, 3) is four, and exactly one blade (3) is fixed to the hub (1) using bolts.

4. The runner of claim 1, wherein the total number of blades (2, 3) is four, and exactly two blades (3) are fixed to the hub (1) using bolts.

5. The runner of claim 1, wherein the total number of blades (2, 3) is more than four, and exactly two blades (3) are fixed to the hub (1) using bolts and the bolted blades (3) are located on opposite sides of the hub (1).

## Patentansprüche

1. Propeller-Läufer für eine Hydraulikturbine oder -pumpe, der eine Nabe (1) und mehrere Schaufeln (2, 3) umfasst, **dadurch gekennzeichnet, dass** bis zu und einschließlich zwei Schaufeln (3) unter Verwendung von Schrauben an der Nabe (1) fixiert sind und die restlichen Schaufeln (2) mit der Nabe verschweißt sind, und wobei an jede verschraubte Schaufel (3) zwei verschweißte Schaufeln (2) angrenzen.

2. Läufer nach Anspruch 1, wobei die Gesamtanzahl an Schaufeln (2, 3) drei beträgt und genau eine Schaufel (3) unter Verwendung von Schrauben an der Nabe (1) fixiert ist.

3. Läufer nach Anspruch 1, wobei die Gesamtanzahl an Schaufeln (2, 3) vier beträgt und genau eine Schaufel (3) unter Verwendung von Schrauben an der Nabe (1) fixiert ist.

4. Läufer nach Anspruch 1, wobei die Gesamtanzahl an Schaufeln (2, 3) vier beträgt und genau zwei Schaufeln (3) unter Verwendung von Schrauben an der Nabe (1) fixiert sind.

5. Läufer nach Anspruch 1, wobei die Gesamtanzahl an Schaufeln (2, 3) mehr als vier beträgt und genau zwei Schaufeln (3) unter Verwendung von Schrauben an der Nabe (1) fixiert sind und die verschraubten Schaufeln (3) auf gegenüberliegenden Seiten der Nabe (1) positioniert sind.

## Revendications

1. Roue mobile de type hélice pour une turbine ou pompe hydraulique, comprenant un moyeu (1) et une pluralité de pales (2, 3), **caractérisée en ce que** pas plus de deux pales (3) sont fixées au moyeu (1) en utilisant des boulons et le reste des pales (2) sont soudées au moyeu, et chaque pale boulonnée (3) étant adjacente à deux pales soudées (2) .

2. Roue mobile selon la revendication 1, dans laquelle le nombre total de pales (2, 3) est de trois et exactement une pale (3) est fixée au moyeu (1) en utilisant des boulons.

3. Roue mobile selon la revendication 1, dans laquelle le nombre total de pales (2, 3) est de quatre et exactement une pale (3) est fixée au moyeu (1) en utilisant des boulons.

4. Roue mobile selon la revendication 1, dans laquelle le nombre total de pales (2, 3) est de quatre et exactement deux pales (3) sont fixées au moyeu (1) en utilisant des boulons.

5. Roue mobile selon la revendication 1, dans laquelle le nombre total de pales (2, 3) est de plus de quatre et exactement deux pales (3) sont fixées au moyeu (1) en utilisant des boulons et les pales boulonnées (3) sont situées sur des côtés opposés du moyeu (1).
